# EUROPEAN PATENT APPLICATION

(11) **EP 1 930 975 A1**
(43) Date of publication of application: **11.06.2008**
(21) Application number: 06797882.5
(22) Date of filing: 06.09.2006
(51) Int. Cl.: H01M 8/24, H01M 8/02, H01M 8/12

(54) **ELECTROCHEMICAL DEVICE AND ELECTROCHEMICAL APPARATUS**

(30) Priority: 07.09.2005 JP 2005259298
(71) Applicant: NGK INSULATORS, LTD., Nagoya-shi, Aichi 467-8530 (JP)
(72) Inventor: ICHIGI, Takenori, Nagoya-shi, Aichi 4678530 (JP); RYU, Takashi, Nagoya-shi, Aichi 4678530 (JP); ITO, Shigenori, Nagoya-shi, Aichi 4678530 (JP); KUNO, Toshiaki, Nagoya-shi, Aichi 4678530 (JP)
(74) Representative: Paget, Hugh Charles Edward
(86) International application number: PCT/JP2006/318090
(87) International publication number: WO 2007/029860

(57) **Abstract**

A planar type electrochemical device 10 has a first electrochemical cell 1A and a second electrochemical cell 1B integrated with each other. Each of the electrochemical cells has a first electrode 5 contacting a first gas, a solid electrolyte 4 and a second electrode 3 contacting a second gas. The first electrode 5 is exposed to the surface of the electrochemical device. A flow route 2a for the second gas is formed in the electrochemical device.

## Description

### Field of the Invention

The present invention relates to an electrochemical device such as a solid oxide fuel cell and an electrochemical system.

### BACKGROUND ARTS

Solid oxide fuel cells are generally divided into two categories; a planar type and a tubular type. According to a solid oxide fuel cell having a shape of a bottomed cylinder described in S.C.Singhal, "Tubular solid oxide fuel cells", in Proceedings of the Third International Symposium on Solid Oxide Fuel Cells, 1993, a plurality of ceramic cells each having a shape of a bottomed cylinder are stacked to provide a stacked cells. A tube is inserted into the cell, and oxidizing gas is flown through the tube and discharged from an opening of the cell to the outside. Fuel gas is flown into a space between the adjacent cells. An electrical collector such as a nickel mesh is provided between the adjacent cells to connect the adjacent cells in series.

According to planar type solid oxide fuel cells, gas sealing is assured in the outer boundary of the cell. For example, according to Fig. 12 of Japanese patent publication No. H06-290798A, it is shown an exploded perspective view of a planar type solid oxide fuel cell. According to this, a sold electrolyte of a ceramic plate, an anode and a cathode are used to produce a planar cell. The ceramic cells and ceramic separator plates are laminated alternately to form a stack. A groove for flowing an oxidizing gas and a groove for flowing a reducing gas are formed so that they intersect each other at a right angle.

### DISCLOSURE OF THE INVENTION

According to a solid oxide fuel cell of so-called cylindrical type, however, much empty space is formed between the cells, so that the generation efficiency per a unit volume is low and an increase of generated power is limited on the viewpoint of structure. On the other hand, in the case of a planar type fuel cell, many planar cells are vertically stacked so that the adjacent cells are separated with a separator (spacer plate). Fuel or oxidizing gas is flown in a space between the separator and each of the adjacent cells. The temperature of the gas is, for example, as high as 800 to 1000 °C, so that the temperature of a manifold is also high to a some degree. It is difficult to seal a plurality of gas routes with the manifold so that the oxidizing gas and fuel gas do not contact each other. During actual assembling process, it is necessary to give a pressure on many stacked planar cells in vertical direction. Such process requires high skill and the productivity is low.

An object of the invention is to provide an electrochemical device having a high efficiency per a unit volume and capable of providing a simpler structure required for sealing of oxidizing and fuel gases.

A first invention provides a planar-type electrochemical device comprising a first electrochemical cell and a second electrochemical cell integrated with each other. Each of the first and second electrochemical cells comprise a first electrode contacting a first gas, a solid electrolyte film and a second electrode contacting a second gas. The first electrode is provided on the surface side of the electrochemical device, and a route for the second gas is formed within the electrochemical device.

The first invention further provides an electrochemical system comprising a plurality of the electrochemical devices, and the electrochemical devices are electrically connected with each other.

A second invention provides an electrochemical system comprising a plurality of electrochemical devices electrically connected with each other. The electrochemical device has a first electrode contacting a first gas, a solid electrolyte film and a second electrode contacting a second gas. The electrochemical device has a pair of main faces and a side face. The system further has a power collecting member for collecting electric power from the side face.

According to the present invention, a pair of electrochemical cells are prepared and integrated. Each electrochemical cell has a first electrode contacting a first gas, a solid electrolyte film and a second electrode contacting a second gas. The first electrode is exposed to the surface of the electrochemical cell and a route for the second gas is formed within the electrochemical device. As described above, the electrochemical device can be formed in a basically planar form so that the efficiency per a unit volume can be improved. Further, the route for the second gas is formed within the device, the second electrode is contacted with the gas flowing in the route and the first electrode is provided on the surface of the device. Therefore, the second gas can be flown within the device, the first gas can be flown in a space between the devices, and the first gas and second gas can be sealed with the device itself. It is thus possible to provide a simple structure for performing the gas seal, so that many devices can be easily stacked. It is thus possible to considerably reduce the production cost and improve the yield, and the invention is useful in the industry.

### BRIEF DESCRIPTION OF THE DRAWINGS

Fig. 1 is an exploded perspective view showing an electrochemical device 10 according to an embodiment of the present invention.
Fig. 2 is a longitudinal perspective view showing the electrochemical device 10.
Fig. 3 is a exploded perspective view showing a conductive plate 9 and an insulating plate 8 around an electrochemical device.
Fig. 4 is a perspective view showing the positional relationship of an arrangement of a plurality of the electrochemical devices 10.
Fig. 5 is a perspective view showing a stack of electrochemical devices 10.
Fig. 6 is a cross sectional view showing a stack of the electrochemical devices 10.
Fig. 7 is an exploded perspective view showing the electrochemical device according to another embodiment of the present invention, wherein a flow route is formed in a second electrode 16 of a cell 18A or 18B.
Fig. 8 is a longitudinal sectional view of a cell 20.
Fig. 9 is a perspective view showing an electrochemical device 30 according to still another embodiment of the present invention, wherein a network of a conductive protrusion is formed on a first electrode.
Fig. 10 is an exploded perspective view of an electrochemical device 10A according to still another embodiment of the present invention.
Fig. 11 is an exploded perspective view of an electrochemical device 11A according to still another embodiment of the present invention.
Fig. 12 is a perspective view schematically showing an electrochemical device 41 according to still another embodiment of the present invention.
Fig. 13 is a exploded perspective view showing the electrochemical device 41 of Fig. 12 and a conductive fixing member 35.
Fig. 14 is a perspective view showing a stack obtained by arranging electrochemical devices 41 and fixing members 35.
Fig. 15 is a perspective view schematically showing an electrochemical device 51 according to still another embodiment of the present invention, wherein a conductive protrusion 19 is formed on an electrode 25.
Fig. 16 is a perspective view showing the electrochemical device 51 of Fig. 15.
Fig. 17 is a perspective view showing a stack obtained by arranging the electrochemical devices 51.
Fig. 18 is a perspective view showing an electrochemical device 32 mounted on a separate manifold member 33.
Fig. 19 (a) is a perspective view showing the electrochemical device 32, and Fig. 19 (b) is an exploded perspective view showing gas flow inside of the device 32.
Fig. 20 is an exploded perspective view showing a device 44 according to still another embodiment of the present invention.
Fig. 21 is a cross sectional view showing a device 44 of Fig. 20.
Fig. 22 is a cross sectional view showing a device 44 of Fig. 20.
Fig. 23 is an exploded perspective view showing a device 47 according to still another embodiment of the present invention.
Figs. 24 (a) and 24 (b) are cross sectional views of the device 47 of Fig. 23, respectively.
Fig. 25 is an exploded perspective view showing a device 60 according to still another embodiment of the present invention.
Figs. 26 (a) and 26 (b) are cross sectional views of the device 60 of Fig. 25.
Fig. 27 (a) is a cross sectional view showing a laminated body of a green sheet 61 for a solid electrolyte and a coating 62 for a second electrode. Fig. 27 (b) is a cross sectional view showing a shaped body 63 for electrode containing a member 64 for forming a flow route. Fig. 27 (c) is a cross sectional view showing a laminated body obtained by integrating the laminated bodies of (a) and (b).
Fig. 28 (a) is a cross sectional view showing a sintered body obtained by sintering the laminated body of Fig. 27 (c). Fig. 28 (b) is a cross sectional view showing the sintered body of Fig. 28 (a) and a first electrode 5 formed thereon.

### Preferred embodiments of the invention

According to the present invention, first and second electrochemical cells are integrated. The method of the integration is not particularly limited, and the following methods may apply.
(1) The first and second electrochemical cells are adhered or joined with each other.
(2) A predetermined pressure is applied on the first and second electrochemical cells to join them with a pressure so as to prevernt gas leakage.

Joining agents are listed as follows.

Slurry of the same material as a ceramic material forming joined parts of the first and second electrochemical cells

Slurry or a glass material having a thermal expansion coefficient substantially same as a ceramic material forming joined parts of the first and second electrochemical cells

According to the present invention, the device has planar shape, which is not limited to a flat plate and includes a curved sheet and arc-shaped sheet. According to the present invention, each of the first and second electrochemical cells has a first electrode contacting a first gas, a sold electrolyte film and a second electrode contacting a second gas. The first electrode is provided on the side of the surface of the electrochemical device, and a flow route for the second gas is formed inside of the electrochemical device.

The first and second electrodes are selected from an anode and a cathode. In the case that one of these is an anode, the other is a cathode. At the same time, the first and second gases are selected from an oxidizing gas and a reducing gas.

The oxidizing gas is not particularly limited as far as oxygen ions can be supplied to a solid electrolyte film from the gas. The gas includes air, diluted air, oxygen and diluted oxygen. The reducing gas includes hydrogen, carbon monooxide, methane or the mixtures thereof.

An electrochemical cell means a cell performing an electrochemical reaction, in the invention. For example, an electrochemical cell includes an oxygen pump and a high temperature vapor electrolyte cell. The high temperature vapor electrolyte cell can be used as a hydrogen production device, and also as a removing system of water vapor. Further, the electrochemical cell can be used as a decomposition cell for NO_{X}, SO_{X}. This decomposition cell can be used as a purification apparatus for discharge gas from motor vehicles, power generation devices or the like. In this case, oxygen in the discharge gas is removed through a solid electrolyte film while NO_{X} is electrolyzed into N₂ and O₂⁻, and the oxygen thus produced by this decomposition can be also removed. Further, by this process, vapor in the discharge gas is electrolyzed to produce hydrogen and oxygen, and the produced hydrogen reduces NOx to N₂. Further, in a preferable embodiment, the electrochemical cell is a solid oxide fuel cell.

The material for a solid electrolyte layer is not limited particularly, and includes any oxide ion conductor. For example it may be yttria-stabilized zirconia or yttria partially-stabilized zirconia. In the case of NOx decomposition cell, cerium oxide is also preferable.

The cathode material is preferably lanthanum-containing perovskite-type composite oxide, more preferably lanthanum manganite or lanthanum cobaltite, and most preferably lanthanum manganite. Into lanthanum cobaltite and lanthanum manganite, strontium, calcium, chromium, cobalt (in the case of lanthanum manganite), iron, nickel, aluminum or the like may be doped. Further, the cathode material may be palladium, platinum, ruthenium, platinum-zirconia cermet, palladium-zirconia cermet, ruthenium-zirconia cermet, platinum-cerium oxide cermet, palladium-cerium oxide cermet, and ruthenium-cerium oxide cermet.

As the anode materials, nickel-zirconia cermet, nickel- cerium oxide cermet, platinum, platinum-zirconia cermet, platinum-cerium oxide cermet, ruthenium, ruthenium-zirconia cermet, ruthenium- cerium oxide cermet and the like are preferable.

Adjacent electrochemical devices may be electrically connected with each other with, for example, a electrical connecting plate. The material of the electrical connecting plate includes a nickel-based alloy such as nickel, Inconel, Nichrome and the like; an iron-based alloy such as stainless steel and a conductive ceramics such as lanthanum chromite.

The construction of each electrochemical cell is not particularly limited. The electrochemical cell may be consisting of three layers of an anode, a cathode and a solid electrolyte layer. Alternatively, the electrochemical cell may have, for example, a porous layer in addition to the anode, cathode and solid electrolyte layer.

According to a preferred embodiment, a route for the second gas is bent or curved inside of the electrochemical device. It is thus possible to lengthen the gas route in the device to improve the utilization efficiency.

Further, according to a preferred embodiment, it is provided a hole for flowing the second gas into the gas flow route in the electrochemical device. Further, according to a preferred embodiment, a hole for flowing the second gas from the gas route to the outside of the device is provided in the electrochemical device.

Further, according to a preferred embodiment, it is provided a gas manifold for the regulation of the supply and discharge of the gas in the electrochemical device. It is thus possible to alleviate the necessity of a gas manifold outside of the electrochemical device, so that the assembling is made easy and the stability of the system is improved. However, it is not necessary to provide a gas manifold inside of the device and an outer manifold may be provided outside of the device, as described later.

Further, according to a preferred embodiment, the electrochemical device is essentially composed of a ceramic material. It is thus possible to stabilize the device, and the stability of the whole electrochemical system against many thermal cycles can be improved.

Further, according to a preferred embodiment, the electrochemical device has a pair of main faces and a side face, and a electrical collecting member collecting power from the side face. It has not been known a so-called planar-type SOFC having a function of collecting power from the side face of the device.

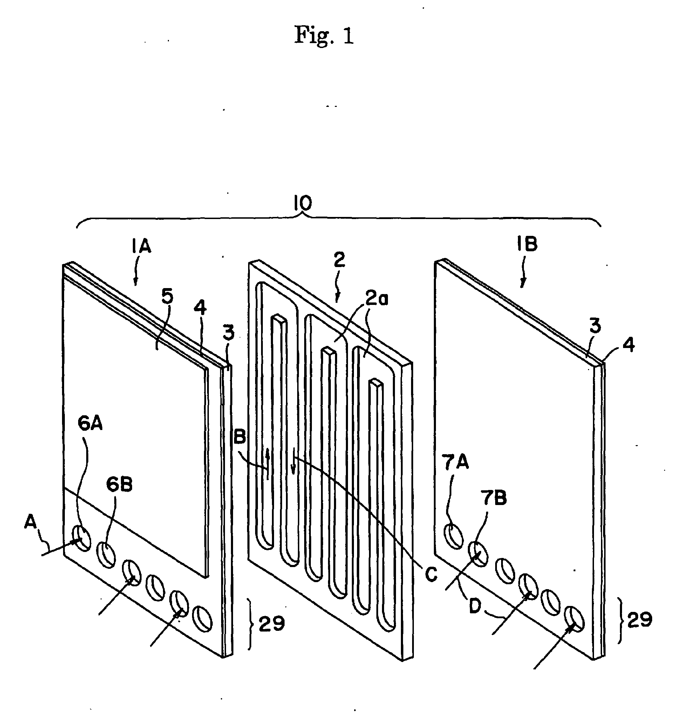

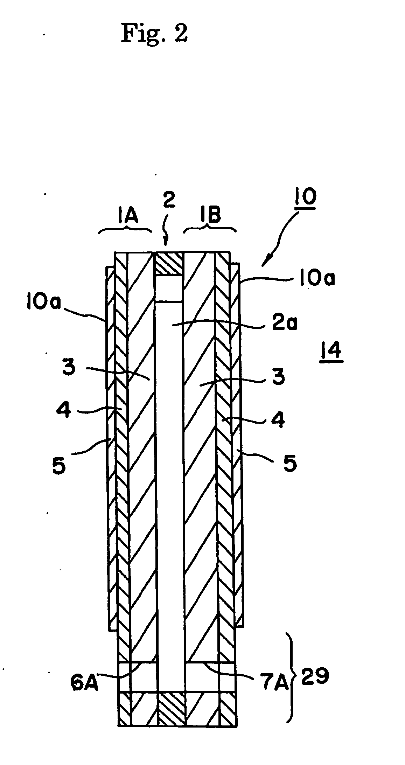

Fig. 1 is an exploded perspective view showing an electrochemical device 10 according to the embodiment described above. Fig. 2 is a longitudinal sectional view showing the electrochemical device 10. The device 10 has a pair of electrochemical cells 1A and 1B and a member 2 for forming a flow route. Each electrochemical cell has a first electrode 5 exposed to a main face 10a of the device, a solid electrolyte film 4 and a second electrode 3 facing the route 2a. A porous plate may be further added to this as a substrate. The member 2 for forming a flow route is inserted between a pair of electrochemical cells 1A and 1B and integrated with each other by appropriate method. It is thus possible to obtain the electrochemical device 10 of a shape of a flat plate.

A manifold portion 29 is provided in the lower part of each of the cells 1A and 1B. Gas supply holes 6A and 7A and gas discharge holes 6B, 7B are provided in the manifold portion 29. The second gas is flown through the gas supply holes 6A and 7A as an arrow "A", flows in the bent flow route 2a as arrows "B" and "C" and then discharged through the discharge holes 6B and 7B as an arrow "D". The first gas flows in an outer space 14 outside of the device 10.

Preferably, a fuel is flown into the inner route of the device and an oxidizing gas such as atmosphere is flown into the outside. It is thereby possible to efficiently utilize the fuel.

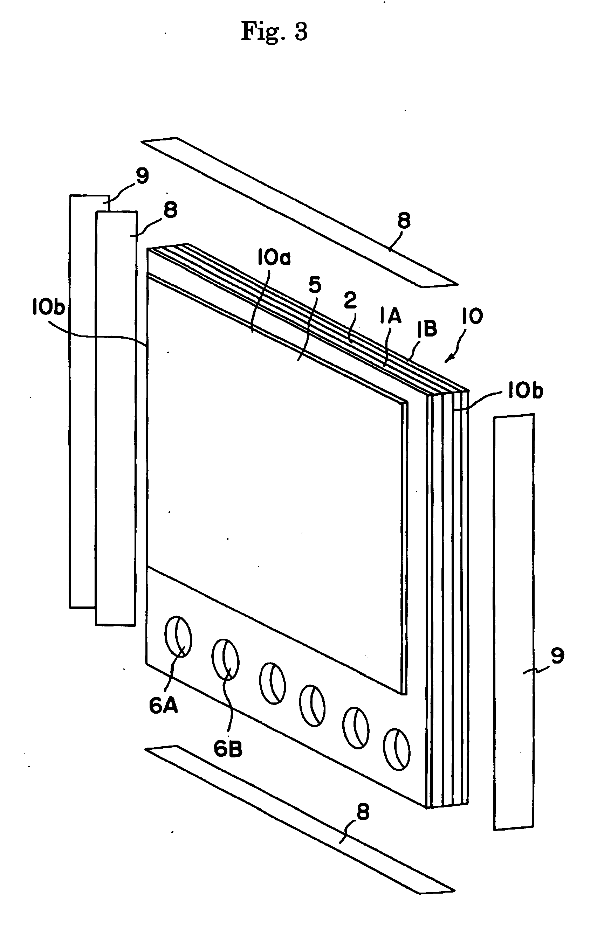

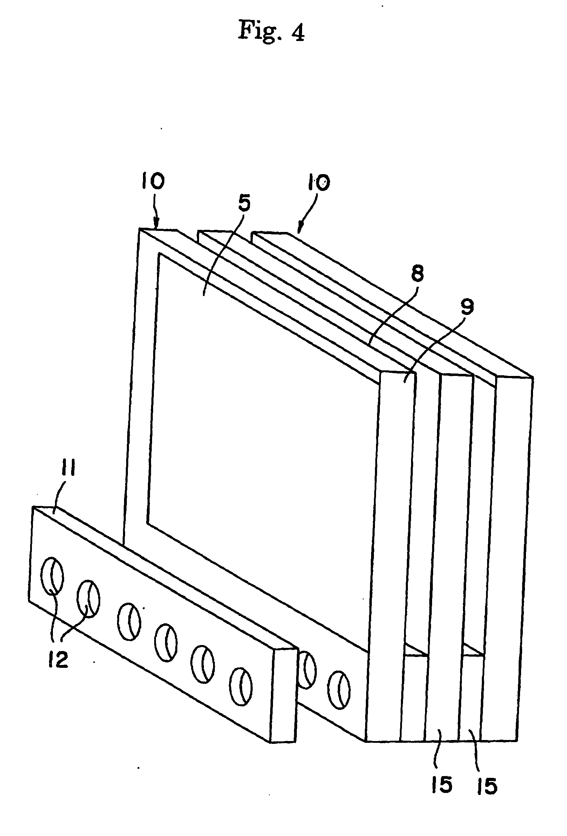

A method of assembling the device 10 is then exemplified. As shown in Fig. 3, a conductive ceramic plate 9 and an insulating plate 8 are joined onto the side face 19b of the device 10 for enabling the collection of power through the side face 10b. As shown in Fig. 4, a fixing plate 11 made of an insulating material is provided between the adjoining devices 10 and fixed by appropriate method to integrate them. At this stage, holes of the fixing member 11 and holes 6A, 6B, 7A and 7B of the devices 10 are adjusted in the positions and dimensions. The insulating ceramic plate 8 is dense and plays a role of maintaining air-tightness of the first gas in the outside and the second gas in the inside of the device 10.

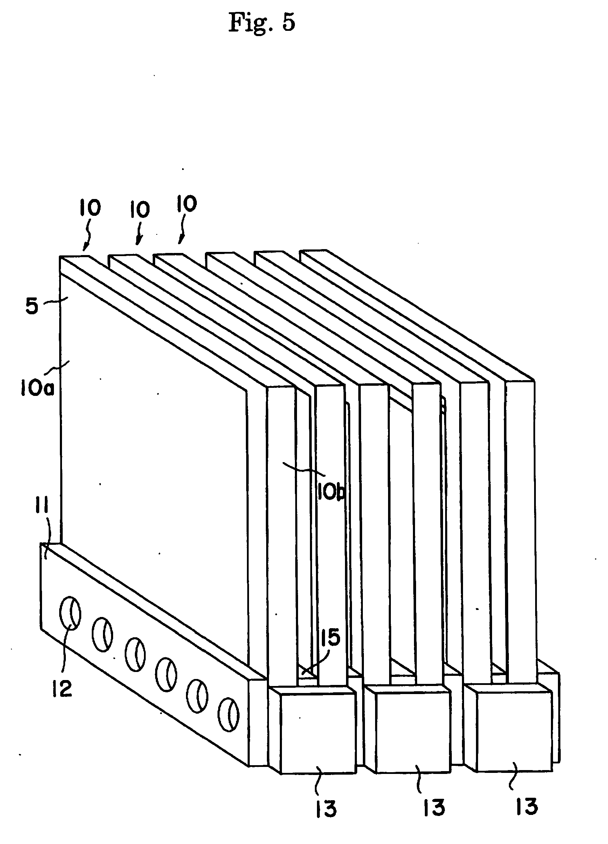

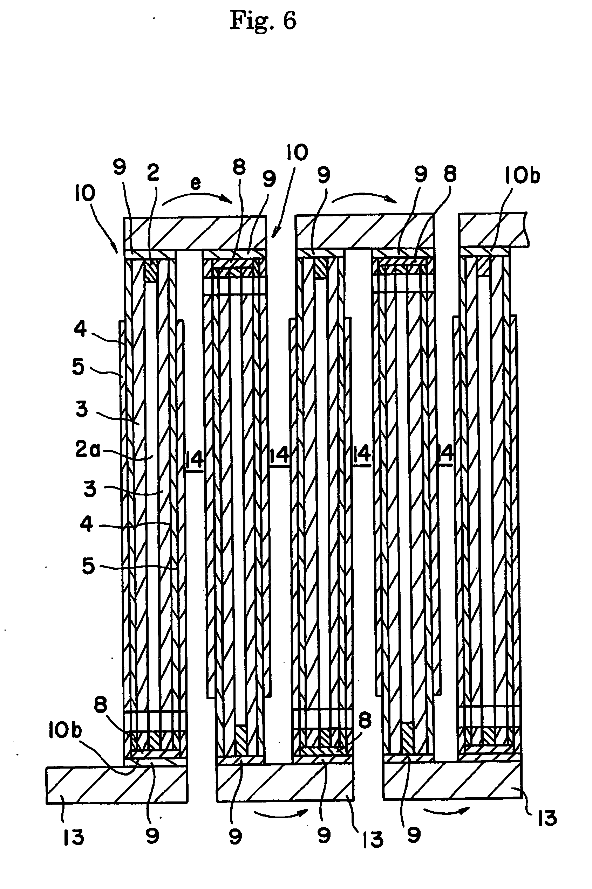

Fig. 5 is a perspective view showing an electrochemical system (stack) thus produced. Fig. 6 is a cross sectional view schematically showing the electrochemical system of Fig. 5.

Electric collecting plates 13 are joined with and electrically connected to side faces 10b, respectively, of the adjoining devices 10. The electric collectors 13 are provided alternatively along the longitudinal axis of the device as shown in Fig. 6.

It is provided, for example that solid oxide fuel cells are used as the devices, oxidizing gas is flown in an outer space 14 of the device 10 and fuel gas is flown in an inner flow route 2a. In this case, electrons (carried as oxide ions in the solid electrolyte layer 4) flow from the conducting plate 9 through the cathode and the solid electrolyte 4 to the anode 3. The electrons then flow from the anode 3, through the conducting plate 9 and electric power collector 13 to the cathode of the adjacent device 10. An insulating plate 8 is provided at one end of the device 10 for preventing the shortcut of the anode and cathode. It is thus possible to electrically connect the devices in series.

According to the present example, the stacks shown in Fig. 6 can be laminated in the vertical direction in the figure to perform the electrical connection in parallel.

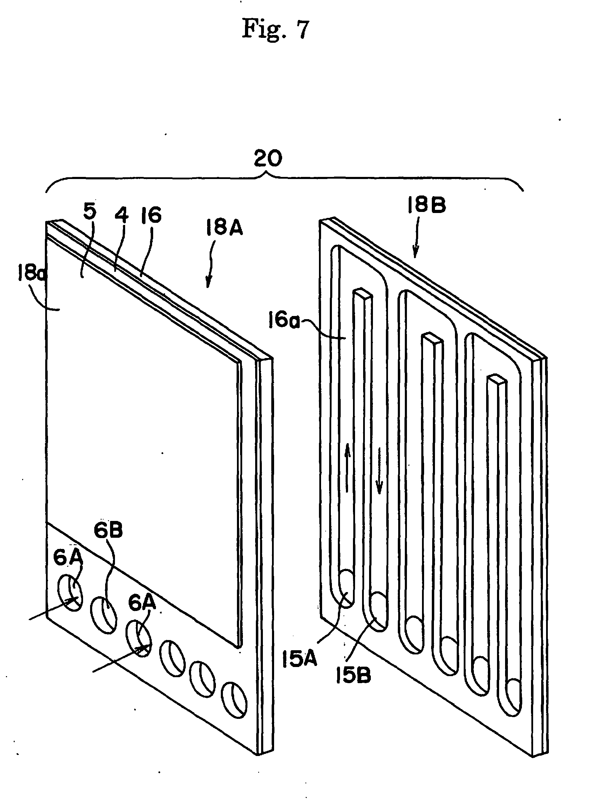

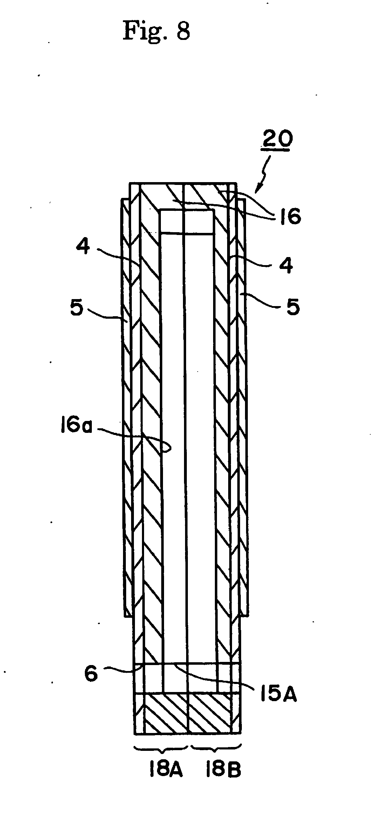

Further, the flow route may be provided inside of the second electrode. For example as shown in Figs. 7 and 8, a device 20 has a pair of electrochemical cells 18A and 18B. Each electrochemical cell is composed of a first electrode 5 exposed to the main face of the device, a solid electrolyte film 4 and a second electrode 16. A groove 16a is formed in the second electrode, in advance, for forming a flow route 16. 15A represents a supply hole and 15B represents a discharge hole. A pair of the cells 18A and 18B are integrated to form the flow route 16a. Further, according to the present example, it is not required that the flow routes are formed in both cells. It is sufficient that the flow route 16a is formed in at least one of the cells.

Further, a power collection layer, preferably of an elongate mesh, made of a higher conductivity may be provided in the first electrode on the side of the surface of the device. It is thus possible to reduce the in-plane electrical resistance and to improve the efficiency of power collection.

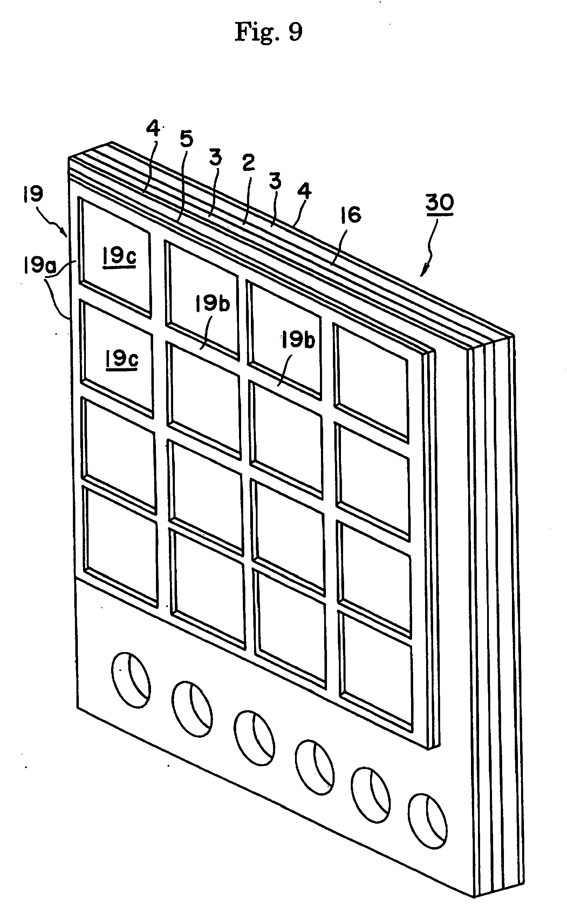

For example, according to a device 30 shown in Fig. 9, an elongate protrusion 19 having a shape of a net or a matrix is formed on the side of the surface of the first electrode 5. The protrusion 19 is composed of strips 19b extending in horizontal direction and strips 19b extending in vertical direction. Network 19c is regularly formed with the strips 19a and 19b. The protrusion 19 can be made of a conductive material so as to improve the amount of power collection from the electrode 5.

Methods of forming the protrusion or flow route on or in the electrode are not particularly limited. However, they may preferably be formed as a film on the surface of the electrode film by printing, and most preferably by screen printing. According to screen printing, the protrusion having the thickness described above can be formed according to an accurate planar pattern using a mask. Further, a member of a net-like shape may be formed in advance and the member may be adhered onto the first electrode.

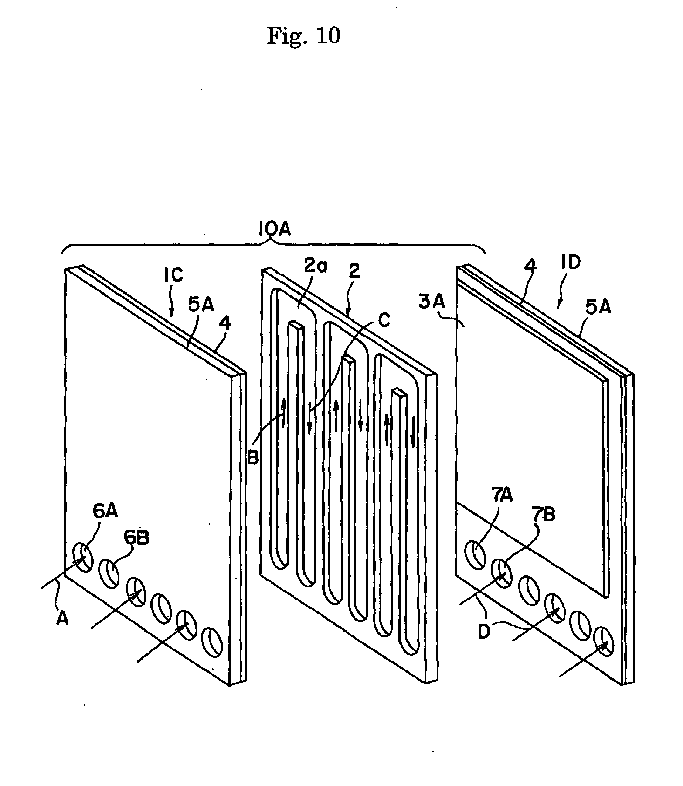

A device 10A shown in Fig. 10 is composed of a pair of electrochemical cells 1A, 1D and a flow route-forming member 2. Each of the cells 1C and 1D is composed of a relatively thicker first electrode 5A functioning as a substrate, a solid electrolyte film 4 and a film-shaped second electrode 3A facing an inner flow route 2a. That is, different from the device shown in Fig. 1, the thinner electrode film faces the inner flow route. According to such example, it is preferred that fuel gas is flown in the inside of the device. The electrode 5A functioning as supporting substrate may preferably be a cathode body.

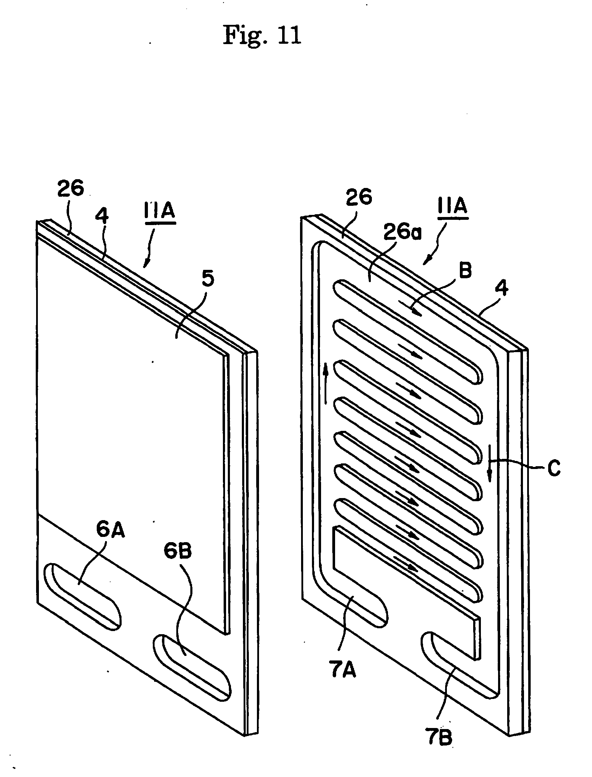

Further, according to an example shown in Fig. 11, a pair of devices 11A are integrated to produce an electrochemical device. According to the present example, however, a flow route 26a is formed inside of an electrode 26 of a solid electrolyte film 4. Further, the flow route 26a is composed of a plurality of elongate flow routes extending horizontally in each cell. As such, it is not particularly limited the direction and pattern of the flow routes.

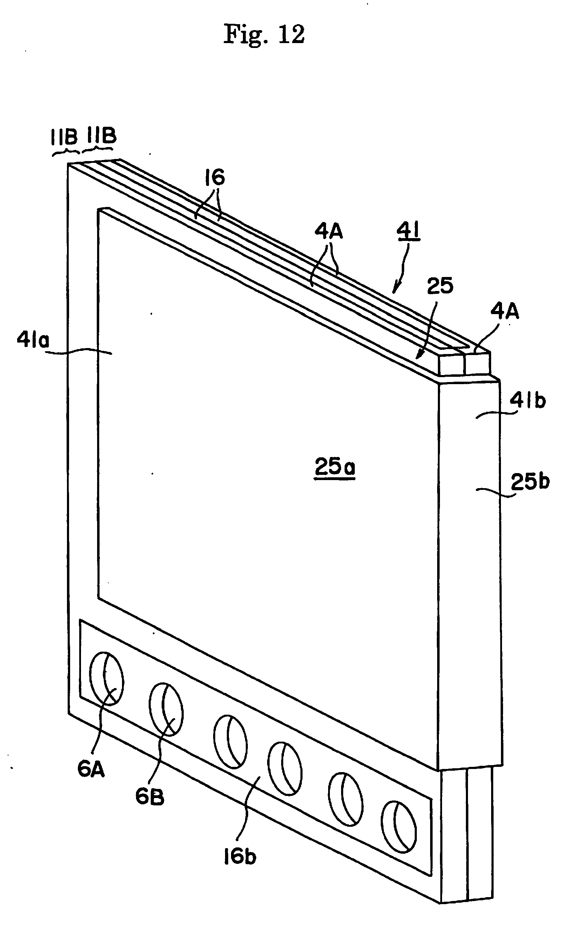

According to the examples described above, electrical power collection is performed from the side faces of each device. According to the first invention, however, the power collection can be performed from the side of main face of each device. Alternatively, the power collection from the side face and main face can be performed at the same time. Figs. 12 to 14 show an example of performing the power collection from the side of the main face of each device.

According to the present example, a pair of devices 11B is integrated to produce a device 41. Each device is composed of an electrode substrate 16 with a flow route formed therein, a solid electrolyte film 4A and a surface electrode 25. According to the present example, however, the surface electrode 25 is composed of a portion 25a and 25 covering the main faces and portions 25 covering the side face.

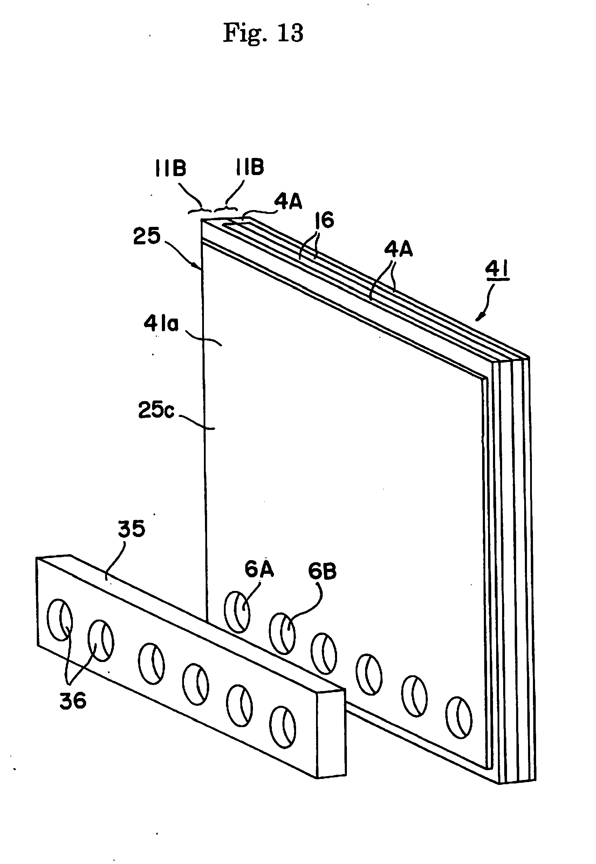

As shown in Fig. 12, a part of the underlying electrode substrate 16 is exposed to form an exposed portion 16b in a manifold part. Further, as shown in Fig. 13, the inner electrode 16 is not exposed and a surface electrode 25c is provided, in the manifold part on the main face in the opposite side of each device 41.

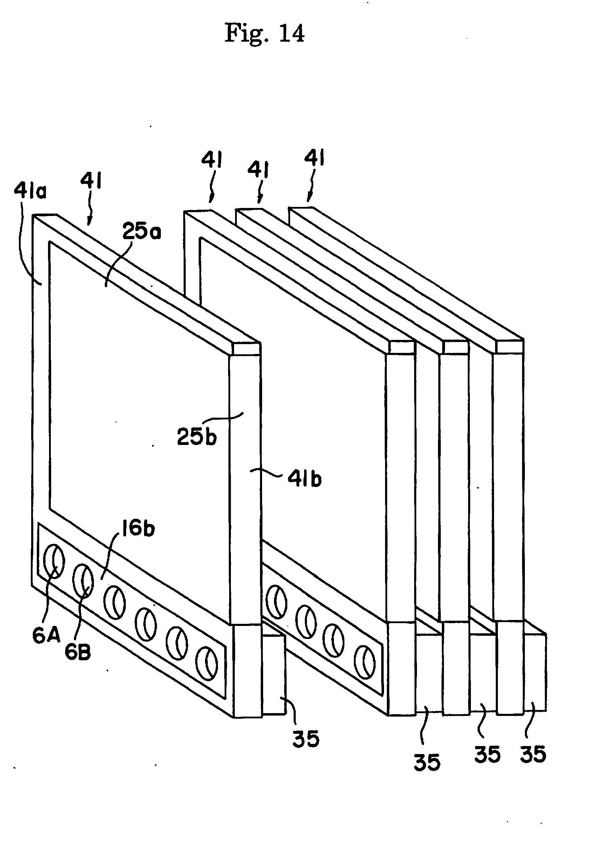

The devices 41 are then arranged in the same orientation as shown in Figs. 13 and 14. A conductive fixing member 35 is interposed between the adjacent devices 41 to integrated them. A through hole 36 is formed in each fixing member 35. The position and dimension of the through hole 36 is matched with those of the holes 6 and 7.

At this stage, the electrodes 16 and 25 of the adjacent devices are electrically connected with each other in series through the conductive fixing member 35.

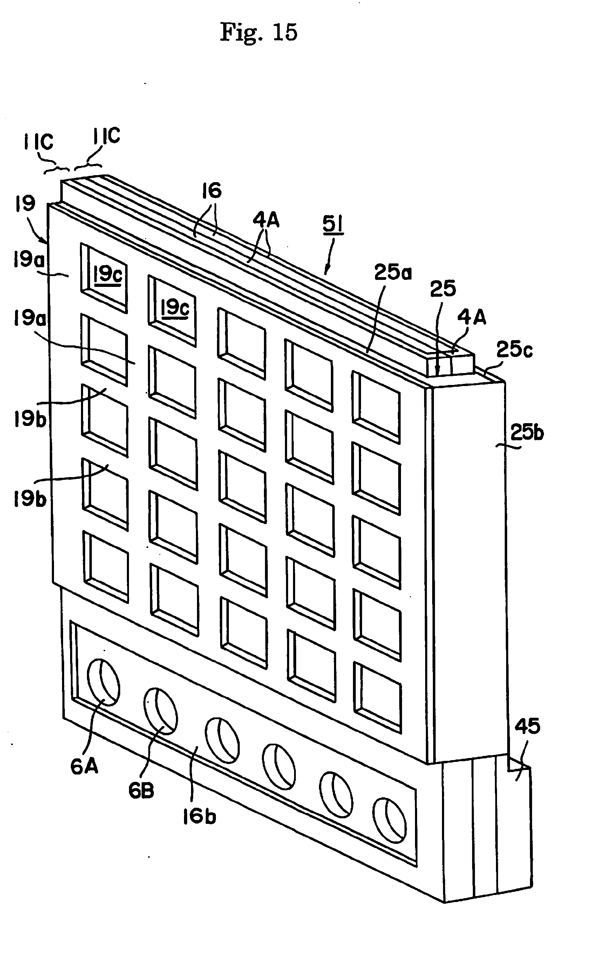

According to an example of Figs. 15 to 17, the mesh-like conductive protrusion is formed on the electrode 25 on the surface side and the conductive fixing member is integrated in the device to reduce the number of parts.

According to the present example, a pair of cells 11C is integrated to produce a device 51. Each cell has an electrode substrate 16 with a flow route formed therein, a solid electrolyte film 4A and a surface electrode 25. According to the present example, however, the surface electrode 25 has portions 25a, 25c covering the main face and portions 25b covering the side faces.

As shown in Fig. 15, a part of the electrode substrate 16 is exposed to form an exposed portion 16b in a manifold part. A net-shaped or matrix-shaped elongate protrusion 19 is formed on the side of surface of the first electrode 5. The protrusion 19 has strips 19b extending in horizontal direction and strips 19a extending in vertical direction. The mesh 19c is regularly formed with the strips 19a and 19b.

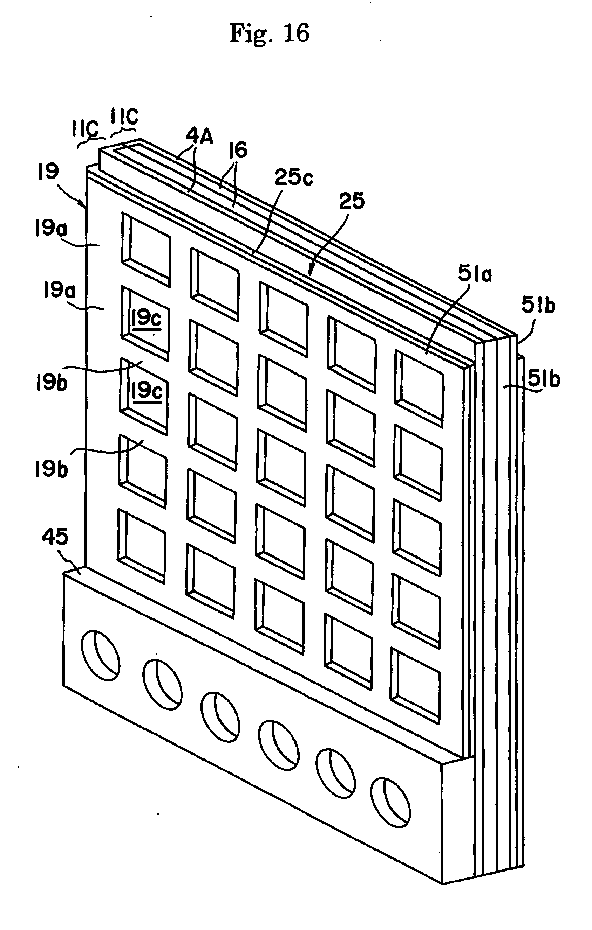

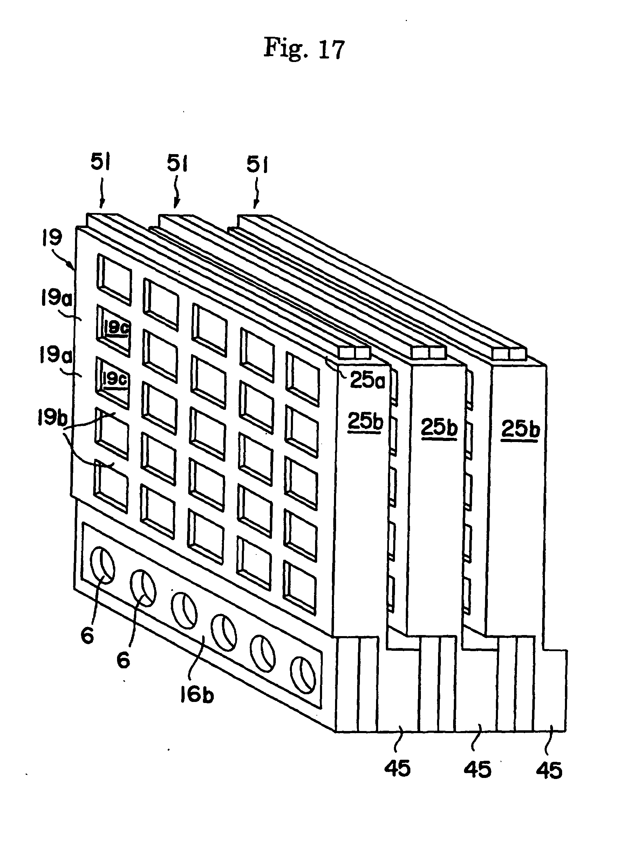

As shown in Fig. 16, the inner electrode 16 is not exposed and a conductive protrusion 45 is provided in the manifold part on the main face 51a on the opposite side of each device 51. The protrusion 45 is electrically connected with electrodes 25 and 19. As shown in Fig. 17, the devices 51 are arranged in the same orientation so that the electrode 16 and the protrusion 45 of the adjacent cells are electrically connected with each other to electrically connect them. At this stage, the electrodes 16 and 25 of the adjacent devices are electrically connected with each other in series.

When electrochemical devices are fixed to each other to produce a stack, it is preferred that an end of each electrochemical device is fixed and the other end is made free without mechanical pressure applied upon it. It is thus possible to further improve the stability of the system upon thermal cycles after the stacking.

Although the dimension of each part is not particularly limited, the followings are applied for example.
Thickness of electrochemical cell: 0.1 to several mm
Thickness of flow route-forming member: 50 µm to 1 mm
Thickness of electrode substrate: 0.1 to several mm
Thickness of solid electrolyte film: several to 10 µm
Thickness of electrode film: several to 100 µm
Thickness of conductive plate: 100 µm to several mm

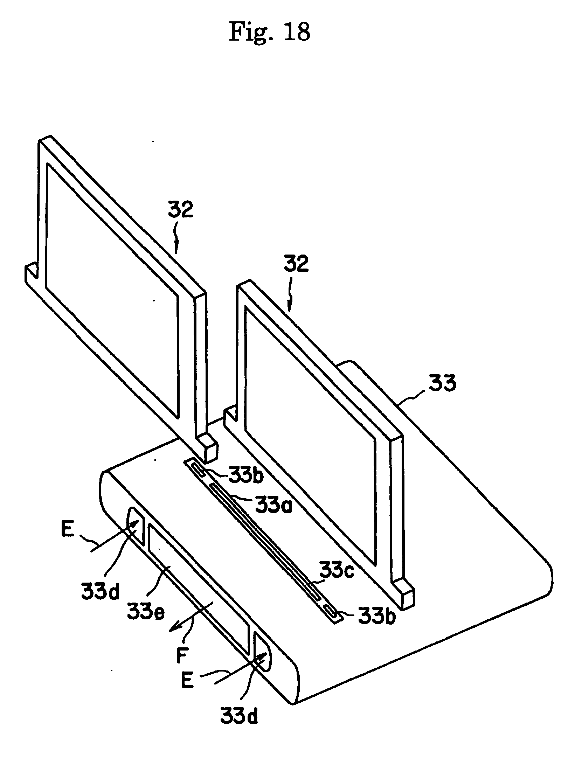

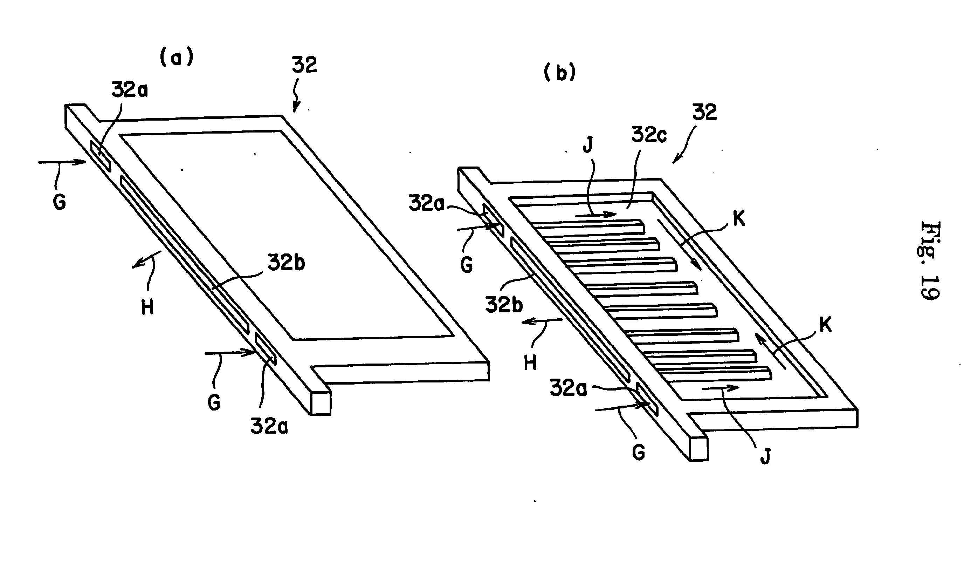

The manifold may preferably be provided in the electrochemical device itself. Alternatively, a separate manifold member may be provided outside of the device. Figs. 18 and 19 relate to this embodiment.

According to an example of Fig. 18, a plurality of electrochemical devices 32 are provided and fixed in a plate-shaped manifold member 33. For example, as shown in Fig. 19 (a), each device 32 has a gas supply hole 32a and a gas discharge hole 32b provided on the mounting face. For example, as shown in Fig. 19 (b), a flow route 32c is formed inside of the device 32.

For example, each device 32 is mounted on a mounting face 33a at its mounted face (bottom face). Gas is flown into a supply hole 33d of the manifold member 33 as an arrow E and is then flown into the device 32 through the holes 33b and supply hole 32a as an arrow G. The gas is then flown in a flow route 32c as arrows J and K and then discharged through a discharge hole 32b as an arrow H. The gas is then flown into a hole 33a and discharged to the outside of the manifold member as an arrow F through a discharge hole 33e.

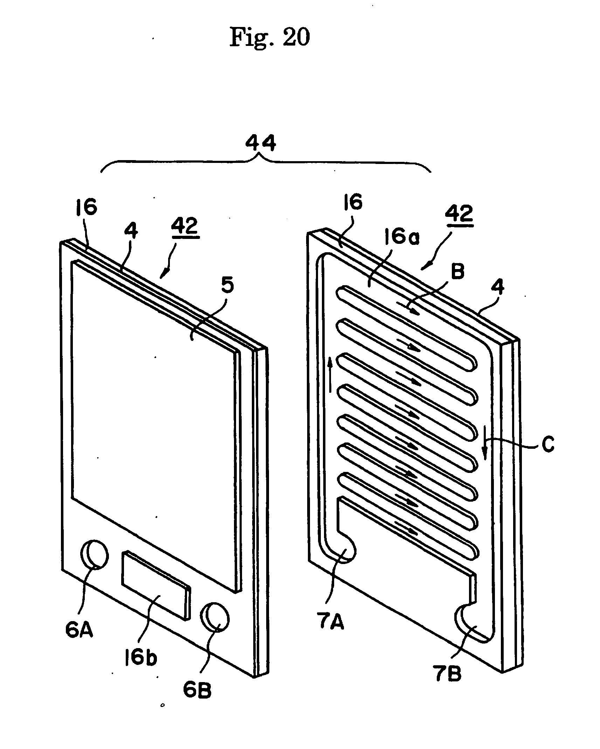

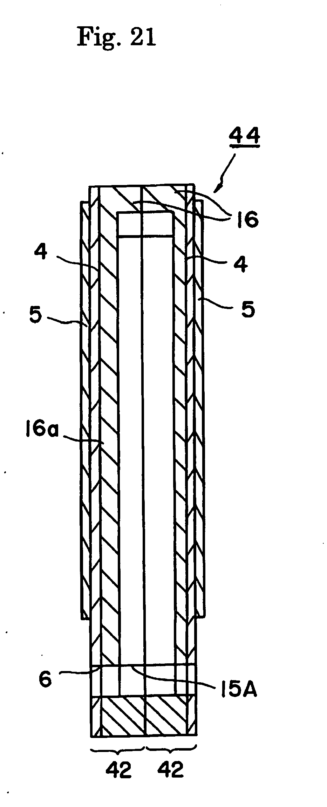

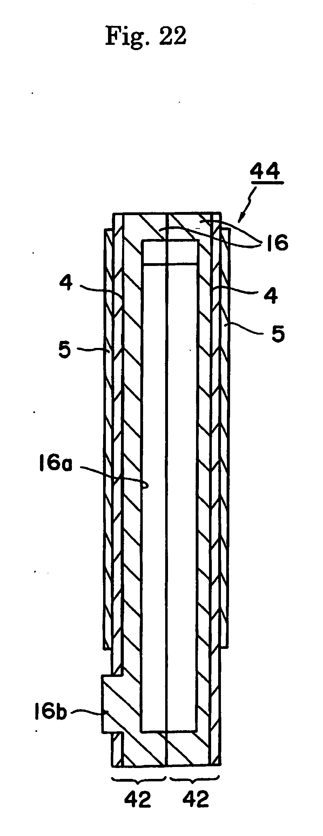

Fig. 20 is an exploded perspective view of an electrochemical device 44. Figs. 21 and 22 are cross sectional views of the device 44, respectively.

The device 44 is composed of a pair of electrochemical cells 42. Each device 42 is composed of a second electrode 16 functioning as a substrate, a solid electrolyte film 4 and a first electrode 5 of a shape of a film on the surface side. A flow route 16a is formed inside of the second electrode 16. Further, the flow route 16a is composed of a plurality of elongate routes extending in horizontal direction in each cell.

As shown in Figs. 20 and 22, the second electrode 16 is provided through the solid electrolyte film 4 and is exposed to the surface side as a reference numeral 16b. The exposed portion 16b is electrically connected with the first electrode 5 of the adjacent device so that the electrical connection in series of the adjacent devices is performed.

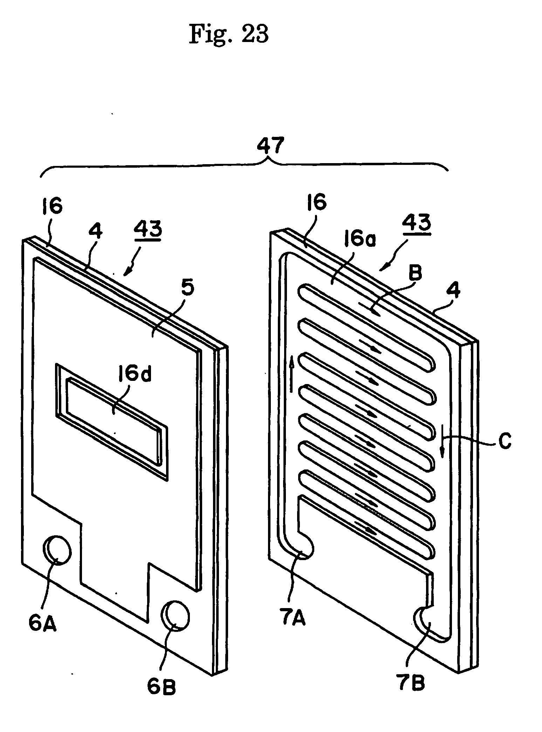

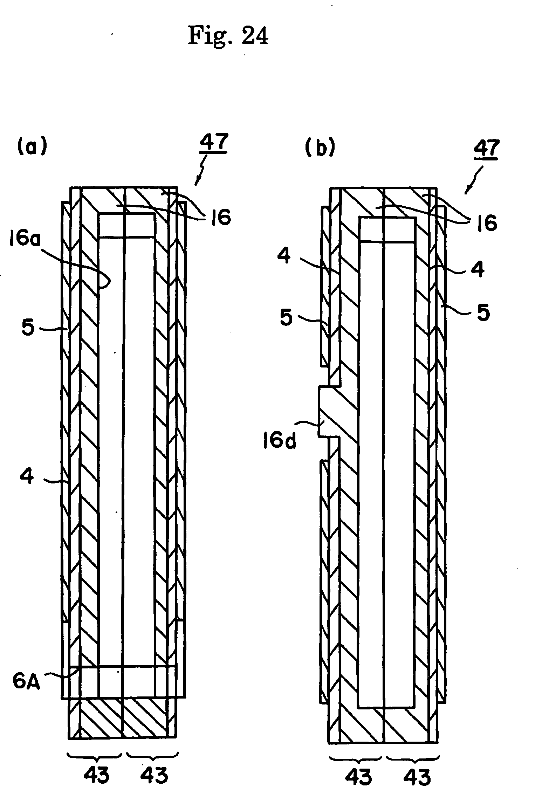

Fig. 23 is an exploded perspective view of an electrochemical device 47. Figs. 24 (a) and (b) are cross sectional views of the device 47, respectively.

The device 47 is composed of a pair of electrochemical devices 43. Each device 43 is composed of a second electrode 16 functioning as a substrate, a sold electrolyte film 4 and a first electrode 5 of a shape of a film on the surface side. A flow route 16a is formed in the second electrode 16. Further, the flow route 16a is composed of a plurality of elongate flow routes extending in horizontal direction in each cell.

As shown in Figs. 23 and 24 (b), the second electrode 16 is formed through the solid electrolyte film 4 and is exposed to the surface side as a reference numeral 16d. The exposed portion 16d is formed in the center of the surface of the device, according to the present example. The exposed portion 16d is electrically connected with the first electrode 5 of the adjacent device, so that the adjacent devices can be electrically connected in series with each other.

Further, the exposed portion of the second electrode to the device surface may be positioned at the center of the surface. It is thus possible to shorten the creepage distance of current within the second electrode and to reduce the in-plane resistance. The efficiency can be thereby further improved.

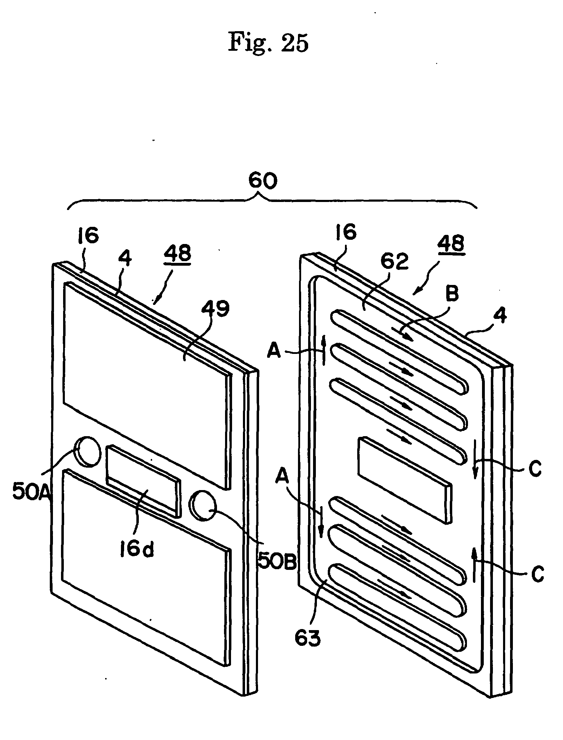

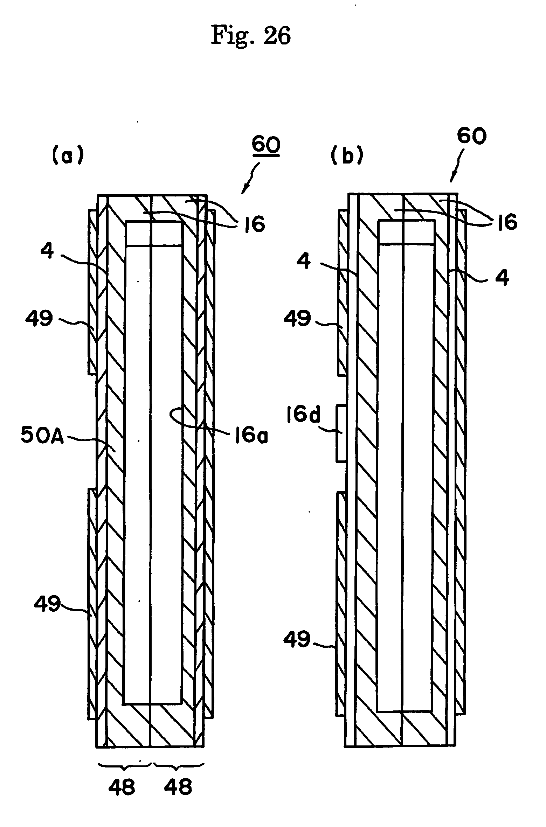

Fig. 25 is an exploded perspective view of an electrochemical device 60. Figs. 26 (a) and (b) are cross sectional views of the device 60, respectively.

The device 60 is composed of a pair of electrochemical cells 48. Each cell 48 is composed of a second electrode 16 functioning as a substrate, a sold electrolyte film 4 and a first electrode 5 of a shape of a film on the surface side. A flow route 16a is formed in the second electrode 16. Further, the flow route 16a is composed of a plurality of elongate flow routes extending in horizontal direction in each cell.

As shown in Figs. 25 and 26 (b), the second electrode 16 is formed through the solid electrolyte film 4 and is exposed to the surface side as a reference numeral 16d. The exposed portion 16d is formed in the center of the surface of the device, according to the present example. The exposed portion 16d is electrically connected with the first electrode 5 of the adjacent device, so that the adjacent devices can be electrically connected in series with each other.

Further, supply holes 50A and 50B are formed in substantially central portion of the device. Second gas is flown through the supply holes and then divided into upper and lower routes in the vicinity of the supply holes. The gas is then flown in the upper flow route 62 and the lower flow route 63 in the cell and flown into one flow route in the vicinity of the discharge hole 50B, and then discharged. According to such structure, it is possible to reduce the length of the gas flow route so as to reduce the distribution of efficiency and temperature due to loss of the gas. It is thus possible to improve the overall efficiency. Further, current flowing inside of the creepage surface of the second electrode is evenly distributed, so that the current density along the creepage surface can be reduced. The efficiency can be thereby further improved.

At the stage of producing the device, as described above, two cells can be joined with each other to integrated them. Alternatively, a material dissipating upon sintering may be embedded inside of a molded body of the second electrode and the molded body may be then sintered. It is thus possible to generate the second electrode and to form a second gas route in the second electrode.

The material of the flow route-forming member which dissipates upon sintering includes the followings.
(1) Carbon
(2) An organic material such as paper, resin, cellulose, wax and starch
(3) sublimation material such as naphthalene

Further, the shape of the flow route-forming member is not particularly limited, and the shape may be any appropriate shape such as a plate, a tape, a sheet or a tube. Further, the method of processing and shaping the material is not particularly limited. For example, a plate, a tape or a sheet may be subjected to cutting, punching, laser processing or screen printing to form the flow route-forming member. Alternatively, appropriate clay may be subjected to press molding, extrusion, slip casting or tape molding to form the flow route-forming member.

### EXAMPLES

It was produced the electrochemical device described referring to Figs. 1 to 6, and generation was performed.

### (Production of anode substrate 3)

An organic binder and water were added to nickel oxide powder and 3 mol% yttria-stabilized zirconia powder, and were wet-mixed in a ball mill to obtain a mixture. The mixture was then dried and granulated. The granulated powder was press-molded using a metal mold to produce two molded bodies for the anode substrates for the cells 1A and 1B.

### (Production of flow route-forming member 2, joining with anode substrate and production of solid electrolyte film)

The flow route-forming member 2 was press molded using the same material as the anode substrate. The molded member was subjected to punching with a press to form the flow route-forming member. The cells 1A, 1B and the flow route-forming member were joined with each other by pressing.

3 mol % yttria-stabilized zirconia powder was used to produce a paste. The paste was then printed on the main faces of the cells 1A and 1B already joined to produce solid electrolyte films. The electrolyte films were dried in a drying furnace.

Slurry of 3 mol % yttria-stabilized zirconia was applied onto the upper face, bottom face and side face, which the cathode film formed on the main face contact in the later stage, of the molded body to form the insulating film 8. The molded body was then sintered at 1400 ° C for 2 hours to obtain the electrochemical device.

### (Formation of the cathode film 5 and conductive plate 8)

A binder and an organic solvent were added to lanthanum manganate powder to produce paste for the cathode film. The paste was used to perform screen printing onto the two main faces of the device to a thickness of about 20 µ m to form the cathode, which was then dried in an oven. The conductive plate 9 having a thickness of 5 mm was produced with lanthanum manganate in advance. The plates were adhered to both main faces of the device with a conductive paste, respectively. The assembly was sintered at 1200 ° C for 1 hour.

### (Stacking)

Insulating fixing members 11 having a thickness of 1mm were produced of alumina spinel (MgO: Al2O3 ratio is 50:50, thermal expansion coefficient is 10.5 × 10⁻⁹). The electrochemical devices 10 and the fixing members were alternately arranged so that the gas supply holes and gas discharge holes of the devices 10 and fixing members 11 were positioned to each other. Both members were joined with each other using fused glass. A power collecting member 13 having a thickness of 5 mm was produced by lanthanum manganite. The adjacent devices were joined to the collecting member at the lower part of the side face with a conductive paste to produce a stack.

### (Example 2)

The electrochemical device shown in Fig. 11 was produced.

### (Production of a green sheet for solid electrolyte)

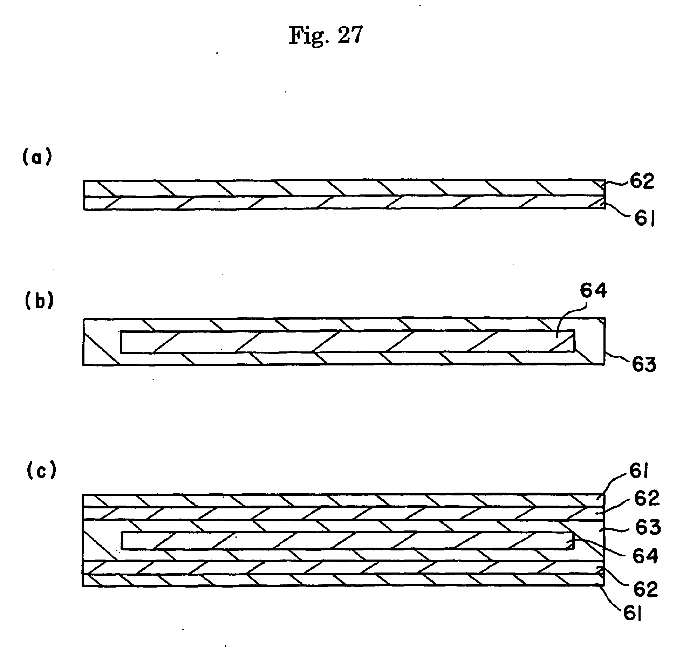

A green sheet 61 for solid electrolyte shown in Fig. 27 (a) was produced.

Alumina balls each having a ball diameter of 10 mm were charged into a nylon container. Into the ball mill, 100 weight parts of 3 mol % yttria-stabilized zirconia (3YSZ), and 20 weight parts of toluene, 11 weight parts of ethanol and 2 weight parts of butanol as solvents were added, and mixed in the ball mill at a rotational rate of 60 rpm. Thereafter, to the mixture, 8 weight parts of polyvinyl butyral, 3 weight parts of dibutyl phthalate, 26 weight parts of toluene and 15 weight parts of ethanol were added and mixed in the ball mill. The thus obtained slurry was then molded by doctor blade method on a sheet (thickness of 50 µm : resin sheet) of polyethylene terephthalate to obtain a green sheet 61 of 3 mol % yttria-stabilized zirconia (3YSZ) having a width of 150 mm and a thickness of 10 µm.

### (Production of first fuel electrode layer 62)

Nickel oxide powder of an average particle size of 0.6 µm and 8YSZ powder of an average particle size of 0.5 µm were weighed to a composition of 35 volume percent of nickel and 65 weight percent of zirconia. To 100 weight parts of the mixed powder, an organic binder and a solvent were added and then blended in an alumina crucible to obtain paste. Thereafter, a coating 62 for the first fuel electrode layer was formed on the green molded body 61 for solid electrolyte film produced as described above by screen printing in a length of 110 mm and a width of 90 mm. The film thickness of the screen printed coating was 15 µ m. Thereafter, the assemblies were cut into a size of a length of 130 mm and a width of 100 mm. Only the solid electrolyte film was formed on the outer periphery of a width of 10 mm. A laminated body of the green sheets for solid electrolyte film 61 and the first fuel electrolyte layer 62 was obtained.

### (Preparation of flow route-forming member 64)

A carbon sheet having a length of 120 mm, a width of 100 mm and a thickness of 0.6 mm was processed by a laser processor to cut out the shape of the gas flow route shown in Fig. 1. The flow route-forming member 64 was thus prepared.

### (Production of the molded body 63 for forming flow route in fuel electrode)

Nickel oxide powder of an average particle size of 1 µ m and 8YSZ powder of an average particle size of 1 µ m were weight to a composition including 35 volume percent of nickel and 65 weight parts of zirconia. Cellulose, an organic binder and water were added thereto and wet mixed in a ball mill. The mixture was dried and granulated in a spray drier. The granulated powder was molded in a metal mold to produce a molded body for fuel electrode having a length of 140 mm, a width of 120 mm and a thickness of 1 mm. Thereafter, the flow route-forming member 64 produced above was placed, and the granulated powder used for the molding was laminated thereon. The laminated body was molded under pressure to produce the molded body 63 for forming flow route in the fuel electrode. The total thickness of the molded body was 2 mm.

(Integration of solid electrolyte + first fuel electrode layer/ molded body for forming flow route in second fuel electrode/ first fuel electrode layer + solid electrolyte)

The produced molded body 63 for forming flow route in fuel electrode was laminated with two laminated bodies each including the green sheet 61 for solid electrolyte and the coating 62 for the first fuel electrode. The thus obtained laminated body was covered with a film container for vacuum package, and then subjected to cold isostatic pressing (pressure of 2 ton/cm² and a holding time of 1 minute). The thus obtained pressed molded body was removed and the film was peeled off to obtain a green molded body (Fig. 27(c)). The molded body has the solid electrolyte/first fuel electrode layer/second fuel electrode layer/ first fuel electrode layer/solid electrolyte.

### (Sintering of green molded body)

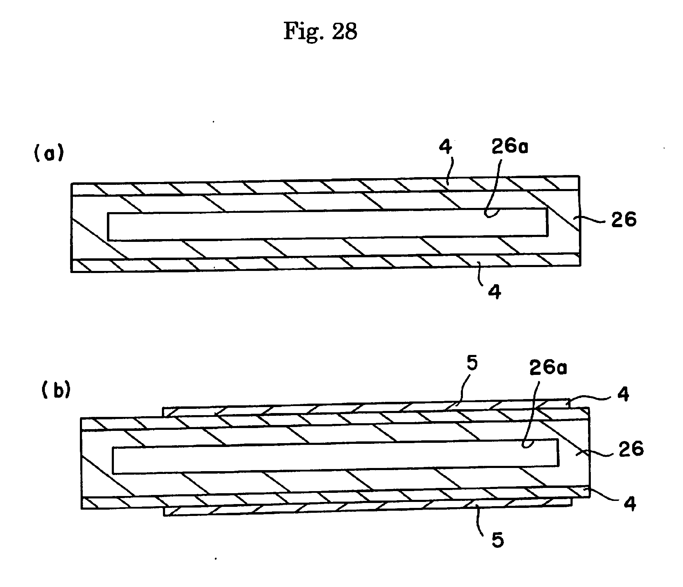

The green molded body was sintered in air for 2 hours at the maximum temperature of 1400 °C. The carbon sheet disappears at this stage to leave empty space. It was thus obtained the laminated sintered body shown in Fig. 28 (a). 26 represents a fuel electrode and 4 represents a solid electrolyte film.

### (Production of first air electrode layer)

50 weight parts of lanthanum manganite having an average particle size of 0.5 µ m and 8YSZ powder having an average particle size of 0.5 µ m were weighed to a composition including 50 volume percent of nickel. 3 weight parts of polyvinyl alcohol modified with alkyl acetate, 30 weight parts of terepineol and 10 weight parts of cellulose were added to 100 weight parts of the mixture of lanthanum manganite and 8YSZ. The mixture was mixed in an alumina crucible to obtain paste. Thereafter, an air electrode layer was formed by screen printing on the surface of the solid electrolyte 4 of the laminated sintered body shown in Fig. 28 (a), and then dried. The film thickness of the screen printing was 15 µ m.

### (Production of second air electrode)

To 100 weight parts of lanthanum manganite powder having an average particle size of 1 µ m as air electrode material, 2 weight parts of polyvinyl alcohol modified with alkyl acetate, 25 weight parts of terepineol and 10 weight parts of cellulose were added. They were mixed in an alumina crucible to obtain paste. Thereafter, second air electrode layer was formed by screen printing on the first air electrode layer of the thus produced laminated sintered body, and then dried. The film thickness was 60 µm.

### (Sintering of first and second air electrodes)

The laminated sintered body with the thus printed air electrode was sintered in air at 1200 °C for 1 hour to obtain a single cell including the flow routes therein.

### (Formation of gas supply holes)

The thus obtained sintered body was processed to form the supply holes and discharge holes. The device shown in Fig. 11 was thus obtained.

### (Stacking)

The thus produced devices were laminated according to the same procedure as the Example 1 so that the devices were electrically connected with each other to produce a stack.

The present invention has been explained referring to the preferred embodiments, however, the present invention is not limited to the illustrated embodiments which are given by way of examples only, and may be carried out in various modes without departing from the scope of the invention.

## Claims

1. A planar electrochemical device comprising a first electrochemical cell and a second electrochemical cell integrated with each other, each of said first and second electrochemical cells comprising a first electrode contacting a first gas, a solid electrolyte film and a second electrode contacting a second gas,
wherein said first electrode is provided in a surface side with respect to said solid electrolyte, and
wherein a flow route for said second gas is formed in said electrochemical device.

2. The electrochemical device of claim 1, wherein said flow route for said second gas is bent or curved.

3. The electrochemical device of claim 1 or 2, further comprising a supply hole for flowing said second gas into said flow route.

4. The electrochemical device of any one of claims 1 to 3, further comprising a discharge hole for discharging said second gas through said flow route to the outside of said electrochemical device.

5. The electrochemical device of any one of claims 1 to 4, further comprising a gas manifold formed therein.

6. The electrochemical device of any one of claims 1 to 5, essentially consisting of a ceramic material.

7. The electrochemical device of any one of claims 1 to 6, comprising a pair of main faces and s side face, and said device further comprising a power collecting member collecting electric power from said side face.

8. The electrochemical device of any one of claims 1 to 6, comprising a pair of main faces and a side face, and said device further comprising a power collecting member collecting electric power from said main face.

9. The electrochemical device of any one of claims 1 to 8, comprising a pair of main faces and a side face, and wherein said first electrode is exposed at each of said main faces.

10. The electrochemical device of any one of claims 1 to 9, comprising a pair of main faces and a side face, and wherein said supply hole and said discharge hole are provided in a central portion of said main face.

11. The electrochemical device of any one of claims 1 to 10, comprising a pair of main faces and a side face, and wherein said second electrode comprises an exposed portion exposed at said main face.

12. The electrochemical device of claim 11, wherein said exposed portion is provided in a central portion of said main face.

13. An electrochemical system comprising a plurality of said electrochemical device of any one of claims 1 to 12, wherein said electrochemical devices are electrically connected with each other.

14. The electrochemical system of claim 13, wherein said electrochemical devices are connected in series.

15. The electrochemical system of claim 13 or 14, wherein said electrochemical device is fixed at one end of each device.

16. An electrochemical system comprising a plurality of electrochemical devices electrically connected with each other, said electrochemical device comprising a first electrode contacting a first gas, a solid electrolyte film and a second electrode contacting a second gas, said electrochemical device comprising a pair of main faces and a side face, and said system further comprising a power collecting member for collecting electric power from said side face.

17. The electrochemical system of claim 16, wherein said electrochemical device comprises first and second electrochemical cells integrated with each other, wherein said first electrode is provided in a surface side of said electrochemical device, and wherein a flow route for said second gas is formed in said electrochemical device.

18. The electrochemical system of claim 16 or 17, wherein said flow route for said second gas is bent or curved.

19. The electrochemical system of any one of claims 16 to 18, further comprising a supply hole for flowing said second gas into said flow route.

20. The electrochemical system of any one of claims 16 to 19, further comprising a discharge hole for discharging said second gas from said flow route to the outside of said electrochemical device.

21. The electrochemical system of any one of claims 16 to 20, further comprising a gas manifold formed in said electrochemical device.

22. The electrochemical system of any one of claims 16 to 21,
wherein said electrochemical device is essentially consisting of a ceramic material.
